# EUROPÄISCHE PATENTSCHRIFT

(11) **EP 0 876 937 B1**
(45) Veröffentlichungstag und Bekanntmachung des Hinweises auf die Patenterteilung: **07.03.2001**
(21) Anmeldenummer: 98105168.3
(22) Anmeldetag: 21.03.1998
(51) Int. Cl.: B60N 2/20, B60N 2/42

(54) **Crash-Verriegelung**
Crash lock
Verrouillage en cas de collision

(30) Priorität: 09.05.1997 DE 19719216; 27.09.1997 DE 19742813
(43) Veröffentlichungstag der Anmeldung: 11.11.1998
(73) Patentinhaber: Kochendörfer & Kiep Metallverarbeitung GmbH, 65830 Kriftel (DE)
(72) Erfinder: Dietz, Horst, 67727 Lohnsfeld (DE); Ehrhardt, Jürgen H., 65795 Hattersheim (DE); Faupel, Rolf, 65830 Kriftel (DE)
(74) Vertreter: KEIL & SCHAAFHAUSEN

(56) Entgegenhaltungen:
- EP-A- 0 543 049
- EP-A- 0 564 962
- EP-A- 0 748 716
- WO-A-92/05978
- DE-A- 2 708 461
- US-A- 4 118 067
- US-A- 5 611 600

## Beschreibung

Die Erfindung betrifft eine Crash-Verriegelung, insbesondere für umklappbare Rückenlehnen von Kraftfahrzeugen, wobei die Rückenlehne an ihren oberen freien Seitenabschnitten lösbar an den Fahrzeugseitenwänden verriegelbar ist und wenigstens eine die Rückenlehne tragende Halteleiste aufweist, die über einen Lagerbock oder dgl. an dem Fahrzeugboden befestigt und mit der Rückenlehne gelenkig gegenüber dem Lagerbock verschwenkbar ist und wobei die Halteleiste über eine erste Schwenkachse gelenkig an einem Hebel gelagert und der Hebel über eine zweite Schwenkachse gelenkig mit dem Lagerbock verbunden ist.

Chrash-Verriegelungen gemäß dem Oberbegrift gelten als allgemein bekannt.

Bei immer mehr Kraftfahrzeugen, insbesondere Kombis aber auch Kleinwagen, ist es möglich, die Rückenlehne umzulegen, um den Kofferraum zu vergrößern. Hierzu werden an den oberen Seitenabschnitten der Rückenlehne vorgesehene Verriegelungen, über die die Rückenlehne mit den Fahrzeugseitenwänden verbunden ist, gelöst, so daß die Rückenlehne über an ihrem unteren Ende vorgesehene Gelenke nach vorne verschwenkt werden kann. Die Verriegelungen gegenüber den Fahrzeugseitenwänden reichen üblicherweise aus, um beim Bremsen ein ungewolltes Umklappen der Rückenlehne zu verhindern. Kommt es jedoch zu einem Unfall (crash) und ist insbesondere viel Gepäck im Kofferraum, das aufgrund der Trägheitskräfte nach vorne drückt, so reichen die Seitenwandverriegelungen möglicherweise nicht mehr aus, um die Rückenlehne in ihrer vertikalen Position zu halten. Ein ungewolltes Umklappen der Rückenlehne birgt jedoch erhebliche Verletzungsrisiken für die Fahrzeuginsassen.

Es wurden daher bereits Crash-Verriegelungen vorgeschlagen, die zusätzlich zu den Seitenwandverriegelungen ein Umklappen der Rückenlehne verhindern sollen. Sie sind am unteren Ende der Rückenlehne vorgesehen und über Bowdenzüge mit den Seitenwandverriegelungen gekoppelt, so daß sie gleichzeitig mit diesen gelöst werden können, wenn die Rückenlehne umgeklappt werden soll. Eine derartige Konstruktion erfordert jedoch viele Teile und ist daher in der Herstellung und Montage aufwendig und teuer.

Es wurde ferner bereits vorgeschlagen, die Halteleisten für eine Crash-Verriegelung zu nutzen. Hierbei ist die Halteleiste an einem Hebel schwenkbar gelagert, der wiederum über einen Bolzen schwenkbar mit dem Lagerbock verbunden ist. Im Crashfall bewegt die Halteleiste den Hebel nach vorne, so daß dieser einen Sicherungssplint abschert. Dadurch kann sich eine an einer dritten Achse schwenkbar gelagerte Verzahnung nach oben bewegen und in eine entsprechende Verzahnung an der Unterseite der Halteleiste eingreifen und diese verriegeln. Abgesehen von dem komplizierten Aufbau hat sich diese Lösung jedoch in der Praxis als nicht ausreichend zuverlässig erwiesen. Auch ist unklar, was mit dem abgescherten Splint geschieht, so daß dieser ggf. die Verriegelung stört.

Aufgabe der Erfindung ist es daher, eine einfache und zuverlässige Crash-Verriegelung zu schaffen, die ein ungewolltes Umklappen der Rückenlehne verhindert.

Diese Aufgabe wird mit der Erfindung dadurch gelöst, daß der Hebel an einem Halteanschlag angreift und dadurch in seiner Ruheposition arretiert wird, daß an dem Lagerbock ein Crash-Anschlag vorgesehen ist, an dem die Halteleiste mit der Rückenlehne im Normalbetrieb vorbeischwenkbar ist, und daß die zweite Schwenkachse derart angeordnet ist, daß die erste Schwenkachse bei einem Verschwenken des Hebels um die zweite Schwenkachse mit der Halteleiste derart nach unten verschoben wird, daß die Halteleiste an dem Crash-Anschlag anschlägt.

Im Normalbetrieb ist der Hebel somit in seiner Ruheposition arretiert, in welcher die Rückenlehne nach Lösen der oberen Seitenwandverriegelungen ohne weiteres um die erste Schwenkachse umgelegt werden kann. Wird jedoch bei geschlossenen Seitenwandverriegelungen bspw. durch einen Crash eine Vorwärtsbewegung der Rückenlehne und damit der Halteleiste induziert, so bewirkt die Halteleiste durch ihre Verbindung mit dem Hebel ein Verschwenken des Hebels um die zweite Schwenkachse, wobei bei einer ersten Ausführungsform eine als Sollbruchstelle dienende Nase des Hebels aufgrund der Belastung umgebogen wird, so daß der Hebel gegenüber dem Halteanschlag verschwenkbar ist. Bei einem Verschwenken des Hebels wird die Halteleiste nach unten in den Lagerbock hinein verschwenkt, so daß sie an dem Crash-Anschlag anschlägt und ein Vorwärtsklappen der Rückenlehne formschlüssig verhindert wird. Die Dimensionierung der den Hebel in seiner Ruheposition arretierenden Nase wird so gewählt, daß im Normalbetrieb eine Beschädigung der Nase ausgeschlossen ist, bei einem Crash aber zuverlässig gewährleistet wird, daß die Nase sich umbiegt und den Hebel freigibt.

Bei einer zweiten Ausführungsform erfolgt das Verschwenken des Hebels um die zweite Schwenkachse entgegen der Wirkung einer Feder. Die Federkraft der den Hebel in seiner Ruheposition arretierenden Feder wird so gewählt, daß im Normalbetrieb ein Verschwenken des Hebels ausgeschlossen ist, bei einem Crash aber zuverlässig gewährleistet wird, daß der Hebel verschwenken kann. Das Vorwärtsklappen der Rückenlehne wird auch hier formschlüssig verhindert. Im Gegensatz zu der Ausgestaltung bei der ersten Ausführungsform, bei der die Nase als Sollbruchstelle dient und nach einem Crash oder einem mißbräuchlichen Auslösen eine Reparatur der Verriegelungseinrichtung notwendig ist, läßt sich die zweite Version durch Lösen der Verriegelung wieder in die Ursprungsstellung zurückführen und kann erneut genutzt werden.

Gemäß einer bevorzugten Ausgestaltung der Erfindung ist in dem Hebel eine Ausnehmung vorgesehen, in der der Halteanschlag aufgenommen ist. Dadurch erhält der Hebel in Normalstellung einen sicheren Halt. Außerdem wird gewährleistet, daß der Hebel sich nur in eine Richtung von dem Halteanschlag wegbewegen kann, nämlich dann wenn die in Weiterbildung der Erfindung die Ausnehmung einseitig begrenzende Nase umgebogen bzw. die Federkraft überwunden wird.

Vorzugsweise ist am Übergang der Nase zu dem Hebel ein Freistich vorgesehen, über dessen Größe auf einfache Weise die gewünschte Belastung eingestellt werden kann, bei der die Nase sich umbiegen soll.

In Weiterbildung der Erfindung wird der Hebel über eine am Hebel und Lagerbock angreifende Zugfeder gegen den Halteanschlag gezogen. Es kann jedoch ebensogut eine Druckfeder verwendet werden, die den Hebel gegen den Anschlag drückt.

Gemäß einer bevorzugten Ausgestaltung der Erfindung werden der Halteanschlag und der Crash-Anschlag durch dasselbe Element, vorzugsweise einen Bolzen, gebildet.

Sollte der Crash-Impuls entgegen der Fahrtrichtung des Fahrzeugs erfolgen, so schlägt die Halteleiste an einem erfindungsgemäß vorgesehenen zweiten Anschlag an und gerät auch bei einer Verformung des Hebels nur noch tiefer in den Verriegelungszustand. Auch hier ist somit eine zuverlässige Crash-Verriegelung gewährleistet.

Vorzugsweise ist der Lagerbock zweischenklig ausgebildet und umgreift den Hebel und die Halteleiste beidseitig mit seinen Lagerschenkeln. Hierdurch wird eine gleichmäßige Kraftverteilung und höhere Stabilität des Systems erreicht.

In Weiterbildung dieses Erfindungsgedankens ist auch der Hebel zweischenklig ausgebildet und umgreift die Halteleiste beidseitig mit seinen Hebelschenkeln.

Hierbei sind erfindungsgemäß der Halte-/Crashanschlag und/oder der zweite Anschlag als durchgehende Bolzen ausgebildet, die die Lagerschenkel des Lagerbocks miteinander verbinden. Analog ist auch die erste Schwenkachse als durchgehender Bolzen zwischen den Hebelschenkeln ausgebildet. Die zweite Schwenkachse ist dagegen zweiteilig ausgebildet und verbindet jeweils einen Lagerschenkel mit dem zugehörigen Hebelschenkel.

Ferner ist erfindungsgemäß vorgesehen, daß die Halteleiste zweischenklig ausgebildet ist, wobei gemäß einer bevorzugten Ausgestaltung zwischen den beiden Schenkeln der Halteleiste an der ersten Schwenkachse eine Scheibe angeordnet ist, die für eine weitgehende Spielfreiheit und Leichtgängigkeit des Systems sorgt.

Die Stabilität des ganzen Systems kann zudem durch einen Distanzbolzen erhöht werden, der die Lagerschenkel des Lagerbocks in ihrer Position zueinander fixiert.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung einer ersten Ausführungsform der erfindungsgemäßen Crash-Verriegelung im Ruhezustand,
- Fig. 2: eine Darstellung ähnlich der in Fig. 1, wobei das Umlegen der Rückenlehne im Normalbetrieb verdeutlicht wird,
- Fig. 3: eine Darstellung ähnlich denen in Fig. 1 und 2 zur Verdeutlichung der Abläufe bei einem Crash-Impuls,
- Fig. 4: eine Darstellung der Crash-Verriegelung nach einem Crash,
- Fig. 5: eine teilweise geschnittene Vorderansicht der Crash-Verriegelung,
- Fig. 6: eine schematische Seitenansicht einer zweiten Ausführungsform der erfindungsgemäßen Crash-Verriegelung im Ruhestand,
- Fig. 7: einen Schnitt entlang der Linie A - A in Fig. 6,
- Fig. 8: einen Schnitt entlang der Linie B - B in Fig. 6 und
- Fig. 9: einen Schnitt entlang der Linie C - C in Fig. 6.

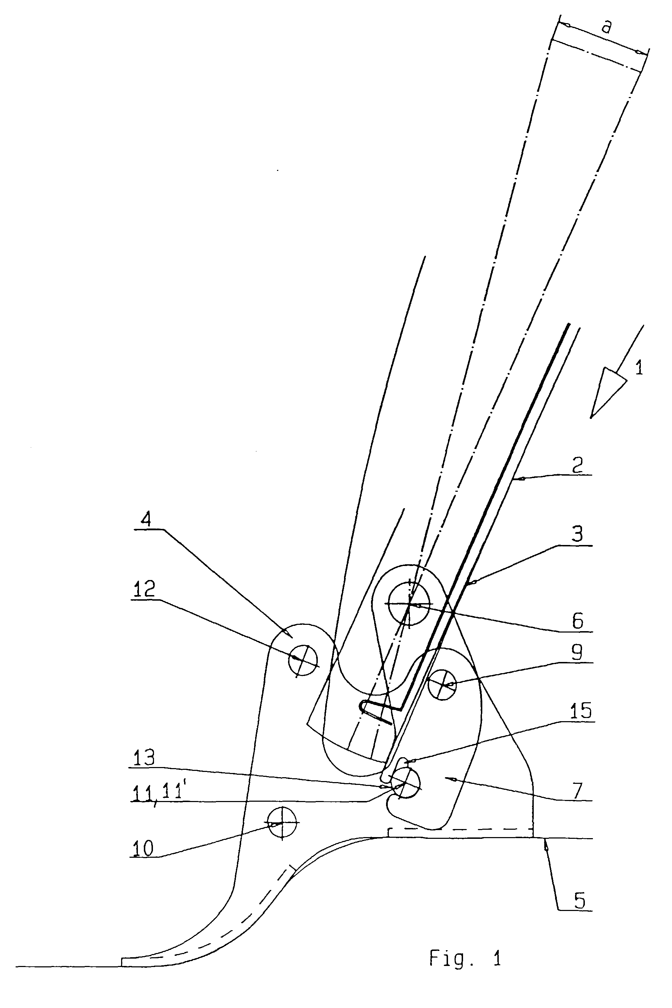

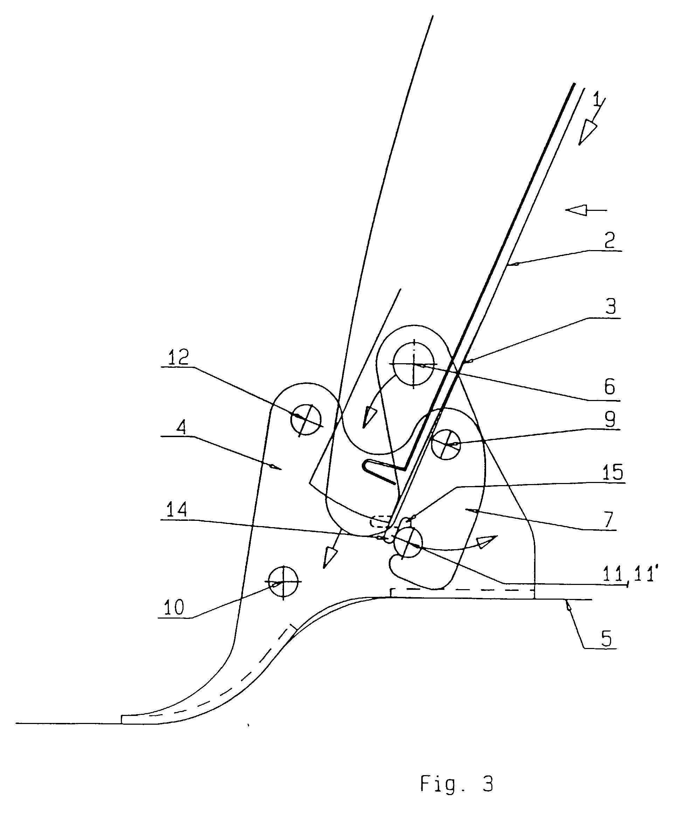

In den Fig. 1 bis 5 ist schematisch eine erste Ausführungsform einer Crash-Verriegelung 1 für eine umklappbare Rückenlehne 2 eines Kraftfahrzeugs dargestellt. Die Rückenlehne 2 ist in hier nicht dargestellter Weise an ihren oberen freien Seitenabschnitten lösbar an den Fahrzeugseitenwänden verriegelbar. Zudem kann vorgesehen sein, daß die Rückenlehne 2 in verschiedenen Vertikalstellungen arretiert wird, wobei der Verstellweg a in Fig. 1 schematisch angedeutet ist.

Die Rückenlehne 2 ist an ihrer Unterseite über eine Halteleiste 3 mit einem Lagerbock 4 verbunden, der am Fahrzeugboden 5 durch Verschrauben, Schweißen oder eine ähnliche Befestigungsart befestigt ist und durch hier nicht dargestellte Sicken verstärkt sein kann.

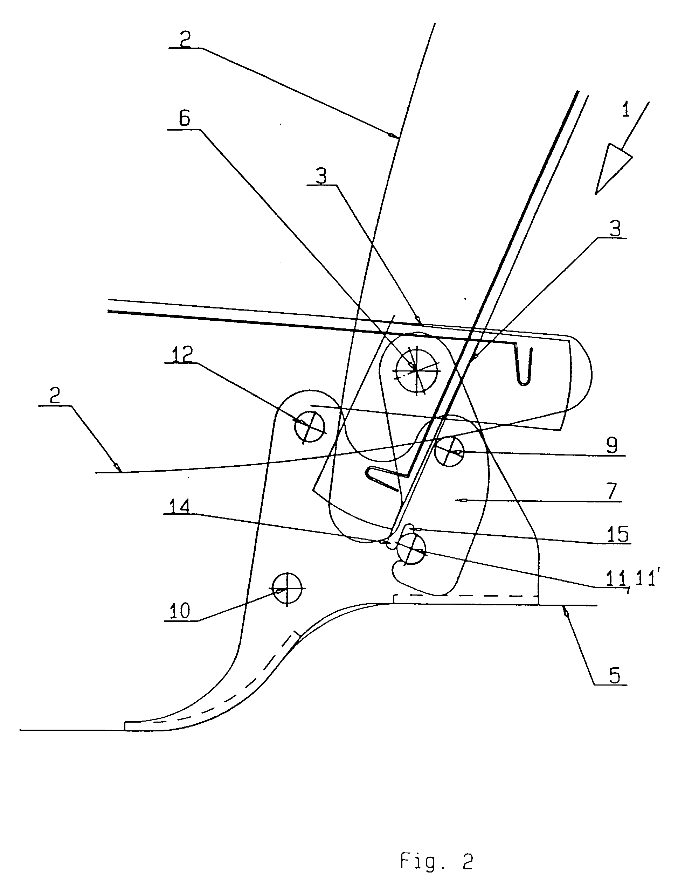

Beim Umlegen der Rückenlehne 2 wird diese mit der Halteleiste 3 um eine erste Schwenkachse 6 in die in Fig. 2 angedeutete umgelegte Position verschwenkt.

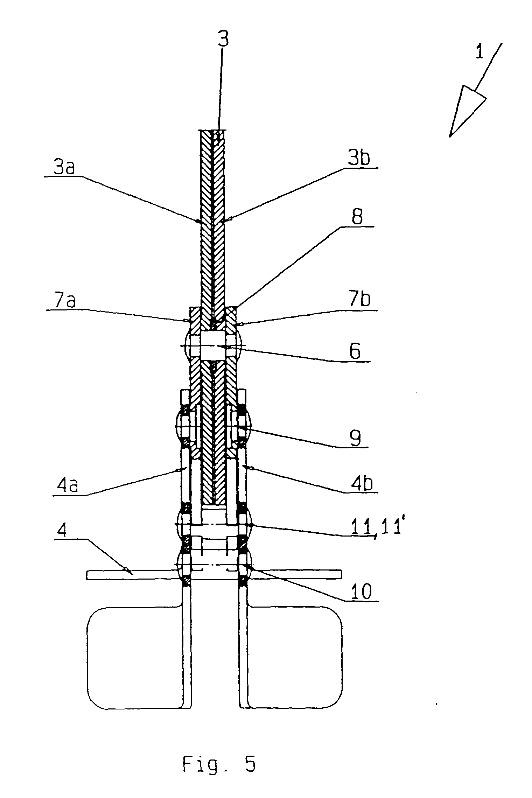

Die erste Schwenkachse 6 ist als durchgehender Bolzen zwischen zwei Schenkeln 7a, 7b eines Hebels 7 ausgebildet. Die Lagerung der Halteleiste 3 auf der ersten Schwenkachse 6 läßt sich am besten in Fig. 5 erkennen. Die Halteleiste 3 ist bei der dargestellten Ausführungsform zweischenklig ausgebildet, wobei zwischen den Schenkeln 3a, 3b eine auf der ersten Schwenkachse 6 aufsitzende Scheibe 8 angeordnet ist, die eine weitgehende Spielfreiheit und Leichtgängigkeit des Systems gewährleisten soll.

Der Hebel 7 ist über eine zweite Schwenkachse 9 gelenkig an dem Lagerbock 4 gelagert. Die zweite Schwenkachse 9 ist zweiteilig ausgebildet und verbindet die Lagerschenkel 4a, 4b jeweils mit den zugehörigen Hebelschenkeln 7a, 7b.

Die beiden Schenkel 4a, 4b des Lagerbocks 4 sind ferner durch einen Distanzbolzen 10 und durch einen ebenfalls als durchgehenden Bolzen ausgebildeten Halte-/Crashanschlag 11, 11' und einen zweiten Anschlag 12 verbunden. Der bei der dargestellten Ausführungsform gleichzeitig als Crashanschlag 11' dienende Halteanschlag 11 ist hierbei in einer Ausnehmung 13 des Hebels 7 aufgenommen, die einseitig durch eine Nase 14 begrenzt wird, so daß der Hebel 7 im Normalbetrieb arretiert ist und sich nicht um die zweite Schwenkachse 9 drehen kann. Am Übergang der Nase 14 zu dem Hebel 7 ist ein Freistich 15 vorgesehen. Die Dimensionierung der Nase 14 und des Freistichs 15 wird in Abhängigkeit von der Rückenlehne 2 und den Crashanforderungen festgelegt.

Unter Bezugnahme auf die Fig. 1 bis 4 wird nun die Funktion der Crash-Verriegelung 1 beschrieben.

In dem in Fig. 1 dargestellten Ruhezustand ist die Rückenlehne 2 an ihren oberen Seitenabschnitten an den Fahrzeugseitenwänden in herkömmlicher Weise verriegelt. Zum Umklappen der Rückenlehne 2 werden die hier nicht dargestellten oberen Verriegelungen gelöst und die Rückenlehne 2 mit der Halteleiste 3 um die erste Schwenkachse 6 an dem Hebel 7 verschwenkt, wobei die Halteleiste 3 an dem den Hebel 7 arretierenden Halteanschlag 11 vorbeischwenkt.

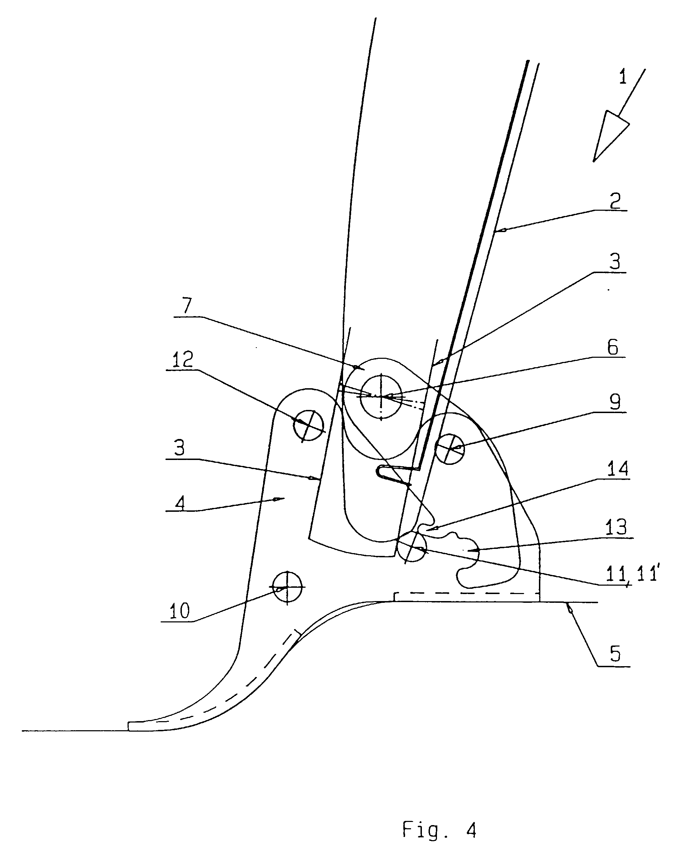

Geschieht nun ein Unfall (Crash), so ist die Rückenlehne 2 mit den Fahrzeugseitenwänden verriegelt, so daß die Rückenlehne 2 durch den Crash-Impuls nach vorne verschoben wird, ohne sich um die erste Schwenkachse 6 zu drehen. Durch die Vorwärtsbewegung der Rückenlehne 2 und damit der Halteleiste 3 wird der Hebel 7 um die zweite Schwenkachse 9 gedreht, wobei aufgrund der durch den Crash induzierten Belastung die Nase 14 umgebogen wird, so daß der Halteanschlag 11 die Drehbewegung des Hebels 7 nicht mehr blockiert. Durch die nun mögliche Drehbewegung des Hebels 7 wird die an dem Hebel 7 befestigte erste Schwenkachse 6 nach unten verschwenkt, so daß die Halteleiste 3 an dem Anschlag 12 vorbeigleitet und an den Crash-Anschlag 11' anschlägt. Die sich hieraus ergebende Position ist in Fig. 4 dargestellt. Durch die Anlage der Halteleiste 3 an dem Crash-Anschlag 11' wird ein Vorwärtsschwenken der Rückenlehne 2 zuverlässig blockiert.

Sollte der Crash in der entgegengesetzten Richtung erfolgen, so schlägt die Halteleiste 3 direkt an dem Anschlag 12 an, so daß auch hier eine Verriegelung gewährleistet ist. Selbst bei einer Verformung des Hebels 7 würde sich die Halteleiste 3 nur noch tiefer in die Verriegelungsposition hineinbewegen.

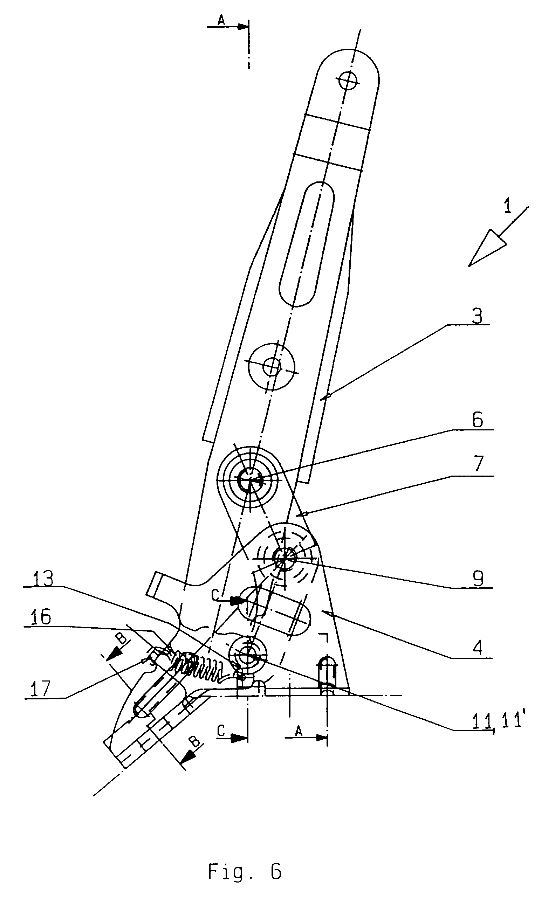

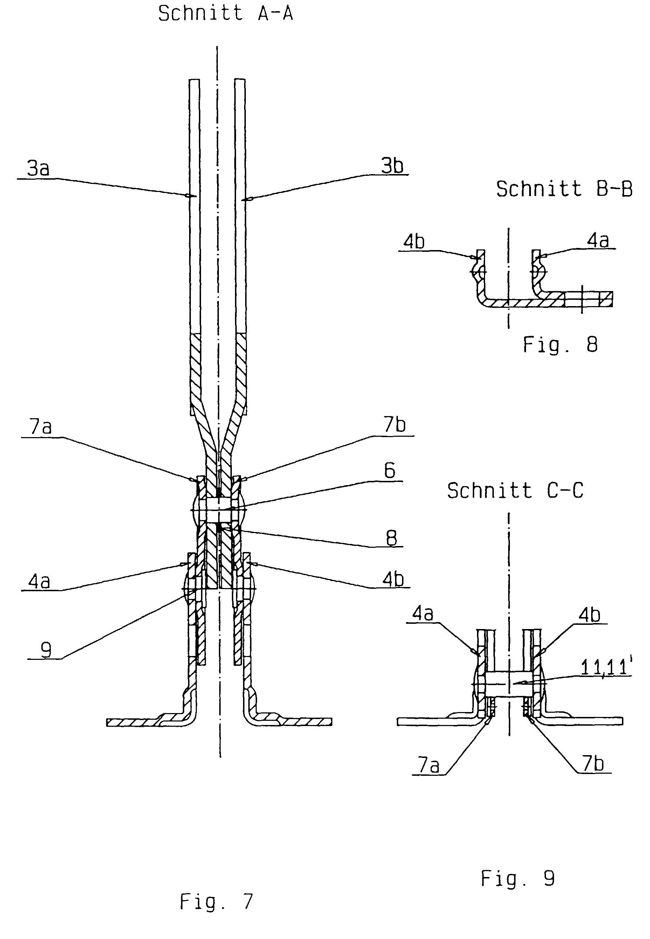

Die Fig. 6 bis 9 zeigen eine abgewandelte Ausführungsform der Crash-Verriegelung gemäß Fig. 1 bis 5. Grundsätzlich sind beide Ausführungsformen gleich ausgebildet, so daß für entsprechende Teile gleiche Bezugszeichen verwendet werden und auf ihre erneute detaillierte Beschreibung verzichtet wird.

Der Unterschied zu der Ausgestaltung gemäß der ersten Ausführungsform liegt darin, daß statt der als Sollbruchstelle dienenden Nase 14 eine Feder 16 vorgesehen ist, die den Hebel 7 gegen den Halteanschlag 11 zieht. Die Feder 16 greift direkt an den Hebel 7 und bspw. an einem an dem Lagerblock 4 ausgebildeten Vorsprung 17 an. Die Federkraft der Feder 16 wird in Abhängigkeit von der Rückenlehne und den Crashanforderungen festgelegt.

Im Ruhezustand ist die Rückenlehne an ihren oberen Seitenabschnitten an den Fahrzeugseitenwänden in herkömmlicher Weise verriegelt. Zum Umklappen der Rückenlehne werden die oberen Verriegelungen gelöst und die Rückenlehne mit der Halteleiste 3 um die erste Schwenkachse 6 an dem Hebel 7 verschwenkt, wobei die Halteleiste 3 an dem den Hebel 7 arretierenden Halteanschlag 11 vorbeischwenkt.

Geschieht nun ein Unfall (Crash), so ist die Rückenlehne mit den Fahrzeugseitenwänden verriegelt, so daß die Rückenlehne durch den Crash-Impuls nach vorne verschoben wird, ohne sich um die erste Schwenkachse 6 zu drehen. Durch die Vorwärtsbewegung der Rückenlehne und damit der Halteleiste 3 wird der Hebel 7 um die zweite Schwenkachse 9 gedreht, sobald die durch den Crash induzierte Belastung die Haltekraft der Feder 16 übersteigt. Durch die nun mögliche Drehbewegung des Hebels 7 wird die an dem Hebel 7 befestigte erste Schwenkachse 6 nach unten verschwenkt, so daß die Halteleiste 3 an dem CrashAnschlag 11' anschlägt. Durch die Anlage der Halteleiste 3 an dem Crash-Anschlag 11' wird ein Vorwärtsschwenken der Rückenlehne 2 zuverlässig blockiert. Nach Wegfall der Belastung kann die Verriegelung wieder gelöst und der Hebel 7 in seine Ursprungsposition zurückgeführt werden, so daß die Crash-Verriegelung wieder einsatzfähig ist.

### Bezugszeichenliste:

- 1: Crash-Verriegelung
- 2: Rückenlehne
- 3: Halteleiste
- 3a,b: Halteleistenschenkel
- 4: Lagerbock
- 4a,b: Lagerschenkel
- 5: Fahrzeugboden
- 6: erste Schwenkachse
- 7: Hebel
- 7a,b: Hebelschenkel
- 8: Scheibe
- 9: zweite Schwenkachse
- 10: Distanzbolzen
- 11: Halteanschlag
- 11': Crashanschlag
- 12: zweiter Anschlag
- 13: Ausnehmung
- 14: Nase
- 15: Freistich
- 16: Feder
- 17: Vorsprung

## Patentansprüche

1. Crash-Verriegelung, insbesondere für umklappbare Rückenlehnen (2) von Kraftfahrzeugen, wobei die Rückenlehne (2) an ihren oberen freien Seitenabschnitten lösbar an den Fahrzeugseitenwänden verriegelbar ist und wenigstens eine die Rückenlehne (2) tragende Halteleiste (3) aufweist, die über einen Lagerbock (4) oder dgl. an dem Fahrzeugboden (5) befestigt und mit der Rückenlehne (2) gelenkig gegenüber dem Lagerbock (4) verschwenkbar ist, wobei die Halteleiste (3) über eine erste Schwenkachse (6) gelenkig an einem Hebel (7) gelagert ist und wobei der Hebel (7) über eine zweite Schwenkachse (9) gelenkig mit dem Lagerbock (4) verbunden ist, **dadurch gekennzeichnet**, daß der Hebel (7) an einem Halteanschlag (11) angreift und dadurch in seiner Ruheposition arretiert wird, daß an dem Lagerbock (4) ein Crash-Anschlag (11') vorgesehen ist, an dem die Halteleiste (3) mit der Rückenlehne (2) im Normalbetrieb vorbeischwenkbar ist, und daß die zweite Schwenkachse (9) derart angeordnet ist, daß die erste Schwenkachse (6) bei einem Verschwenken des Hebels (7) um die zweite Schwenkachse (9) mit der Halteleiste (3) derart nach unten verschoben wird, daß die Halteleiste (3) an dem Crash-Anschlag (11) anschlägt.

2. Crash-Verriegelung nach Anspruch 1, **dadurch gekennzeichnet,** daß der Hebel (7) mit einer Nase (14) oder dgl. an dem Halteanschlag (11) angreift.

3. Crash-Verriegelung nach Anspruch 1 oder 2, **dadurch gekennzeichnet,** daß der Hebel (7) federbelastet gegen den Halteanschlag (11) anliegt.

4. Crash-Verriegelung nach einem der Ansprüche 1 bis 3, **dadurch gekennzeichnet,** daß in dem Hebel (7) eine Ausnehmung (13) vorgesehen ist, in der der Halteanschlag (11) aufgenommen ist.

5. Crash-Verriegelung nach Anspruch 4, **dadurch gekennzeichnet,** daß die Ausnehmung (13) einseitig von der Nase (14) begrenzt wird.

6. Crash-Verriegelung nach einem der Ansprüche 3 bis 5, **dadurch gekennzeichnet,** daß an dem Hebel (7) und dem Lagerblock (4) eine Zugfeder (16) angreift.

7. Crash-Verriegelung nach einem der Ansprüche 1 bis 6, **dadurch gekennzeichnet,** daß am Übergang der Nase (14) zu dem Hebel (7) ein Freistich (15) vorgesehen ist.

8. Crash-Verriegelung nach einem der Ansprüche 1 bis 7, **dadurch gekennzeichnet,** daß der Anschlag (11, 11') sowohl als Halteanschlag (11) als auch als Crash-Anschlag (11') dient.

9. Crash-Verriegelung nach einem der Ansprüche 1 bis 8, **dadurch gekennzeichnet**, daß an dem Lagerbock (4) ein zweiter Anschlag (12) vorgesehen ist, an dem die Halteleiste (3) bei einem nach hinten gerichteten Crash-Impuls anschlägt.

10. Crash-Verriegelung nach einem der Ansprüche 1 bis 9, **dadurch gekennzeichnet,** daß der Lagerbock (4) zweischenklig ausgebildet ist und den Hebel (7) und die Halteleiste (3) beidseitig mit Lagerschenkeln (4a,b) umgreift.

11. Crash-Verriegelung nach einem der Ansprüche 1 bis 10, **dadurch gekennzeichnet,** daß der Hebel (7) zweischenklig ausgebildet ist und die Halteleiste (3) beidseitig mit Hebelschenkeln (7a,b) umgreift.

12. Crash-Verriegelung nach Anspruch 10, **dadurch gekennzeichnet,** daß der Halte-/Crashanschlag (11, 11') und/oder der zweite Anschlag (12) als durchgehende Bolzen ausgebildet sind, die die Lagerschenkel (7a,b) des Lagerbocks (7) miteinander verbinden.

13. Crash-Verriegelung nach Anspruch 11, **dadurch gekennzeichnet,** daß die erste Schwenkachse (6) als durchgehender Bolzen zwischen den Hebelschenkeln (7a,b) ausgebildet ist.

14. Crash-Verriegelung nach Anspruch 10, **dadurch gekennzeichnet,** daß die zweite Schwenkachse (9) zweiteilig ausgebildet ist und die Lagerschenkel (4a,b) des Lagerbocks (4) mit den entsprechenden Schenkeln (7a bzw. 7b) des Hebels verbindet.

15. Crash-Verriegelung nach einem der Ansprüche 1 bis 14, **dadurch gekennzeichnet,** daß die Halteleiste (3) zweischenklig ausgebildet ist.

16. Crash-Verriegelung nach Anspruch 15, **dadurch gekennzeichnet,** daß zwischen den beiden Schenkeln (3a,b) der Halteleiste (3) an der ersten Schwenkachse (6) eine Scheibe (8) angeordnet ist.

17. Crash-Verriegelung nach einem der Ansprüche 1 bis 16, **dadurch gekennzeichnet,** daß die Lagerschenkel (4a,b) des Lagerbocks (4) durch einen Distanzbolzen (10) in ihrer Position zueinander fixiert werden.

## Claims

1. A collision interlock system, in particular for fold-down seat backs (2) of motor vehicles, in which the seat back is releasably interlockable with the vehicle side wall at its upper free side sections and has at least one support rail (3) carrying the seat back (2), which is attached via a mounting block (4) or the like to the vehicle floor (5), and along with the seat back (2) is pivotable in articulated fashion with respect to the mounting block (4), wherein the support rail (3) is mounted in articulated fashion on a lever (7) via a first pivot shaft (6), and wherein the lever (7) is joined to the mounting block (4) in articulated fashion via a second pivot shaft (9), **characterized in** that the lever engages on a retaining stop (3) and is thereby immobilized in its inactive position, that a collision stop (11'), past which the support rail (3) along with the seat back (2) can pivot in normal operation, is provided on the mounting block (4), and that the second pivot shaft (9) is arranged in such a way that when the lever (7) pivots about the second pivot shaft (9), the first pivot shaft (6) is displaced along with the support rail (3) downward in such way that the support rail (3) strikes against the collision stop (11).

2. The collision interlock system of claim 1, **characterized in** that the lever (7) engages on the retaining stop (11) with a lug (14) or the like.

3. The collision interlock system of claim 1 or 2, **charaterized in** that the lever (7) abuts against the retaining stop (11) while being biased by a spring.

4. The collision interlock system of one of claims 1 to 3, **characterized in** that a recess (13) in which the retaining stop (11) is received is provided in the lever (7).

5. The collision interlock system of claim 4, **characterized in** that the recess (13) is delimited on one side by the lug (14).

6. The collision interlock system of one of claims 3 to 5, **characterized in** that a tension spring (16) engages on the lever (7) and the mounting block (4).

7. The collision interlock system of one of claims 1 to 6, **characterized in** that an undercut (15) is provided at the transition from the lug (14) to the lever (7).

8. The collision interlock system of one of claims 1 to 7, **characterized in** that the stop (11, 11') serves both as the retaining stop (11) and as the collision stop (11').

9. The collision interlock system of one of claims 1 to 8, **characterized in** that a second stop (12), against which the support rail (3) strikes upon a collision inpulse directed backwards, is provided on the mounting block (4).

10. The collision interlock system of one of claims 1 to 9, **characterized in** that the mounting block (4) has two arms and encloses the lever (7) and the support rail (3) on both sides with mounting arms (4a, b).

11. The collision interlock system of one of claims 1 to 10, **characterized in** that the lever (7) has two arms and encloses the support rail (3) on both sides with lever arms (7a, b).

12. The collision interlock system of claim 10, **characterized in** that the retaining/collision stop (11, 11') and/or the second stop (12) is a continuous bolt effectively joining the arms (7a, b) of the mounting block to each other.

13. The collision interlock system of claim 11, **characterized in** that the first pivot shaft (6) is a continuous bolt between the lever arms (7a, b).

14. The collision interlock system of claim 10, **characterized in** that the second pivot shaft (9) has two parts and joins the mounting arms (4a, b) of the mounting block (4) to the corresponding arms (7a or 7b) of the lever.

15. The collision interlock system of one of claims 1 to 14, **characterized in** that the support rail (3) has two arms.

16. The collision interlock system of claim 15, **characterized in** that a disc (8) is arranged between two arms (3a, b) of the support rail (3) on the first pivot shaft (6).

17. The collision interlock system of one of claims 1 to 16, **characterized in** that the mounting arms (4a, b) of the mounting block (4) are immobilised in their positions with respect to each other by means of a spacer bolt (10).

## Revendications

1. Verrouillage en cas de collision, notamment pour dossier (2) rabattable de véhicules automobiles, dans lequel le dossier (2) peut être verrouillé de façon réversible dans sa partie supérieure libre aux parois latérales du véhicule et présente pour soutenir le dossier (2) au moins un listeau de maintien (3) qui est fixé au sol du véhicule par un support de palier (4) ou une pièce similaire et qui peut pivoter avec le dossier (2) par rapport au support de palier (4), le listeau de maintien (3) étant articulé autour d'un premier axe pivot (6) sur un pivot (7) et le pivot (7) étant articulé autour d'un deuxième axe pivot (9) sur le support palier (4), **caractérisé en ce que** le levier (7) s'encliquette sur une butée de retenue (11) de sorte à être arrêté dans sa position de repos, en ce qu'une butée de choc (11') est prévue sur le support de palier (4) devant lequel, en utilisation normale, passe le listeau de maintien (3) avec le dossier (2) et en ce que le second axe pivot (9) est positionné de telle sorte que, lorsque le levier (7) pivote autour du second axe pivot (6), le premier axe pivot (6) est déplacé avec le listeau de maintien (3) vers le bas de telle sorte que le listeau de maintien (3) bute contre la butée de choc (11).

2. Verrouillage en cas de collision selon la revendication 1, **caractérisé en ce que** le levier (7) s'encliquette sur la butée de retenue (11) avec un ergot (14) ou un élément similaire.

3. Verrouillage en cas de collision selon la revendication 1 ou 2, **caractérisé en ce que** le levier (7) est appuyé contre la butée de retenue (11) au moyen d'un ressort.

4. Verrouillage en cas de collision selon l'une des revendications 1 à 3, **caractérisé en ce qu'**il est prévu dans le levier (7) un évidement (13) dans lequel est reçue la butée de retenue (11).

5. Verrouillage en cas de collision selon la revendication 4, **caractérisé en ce que** l'évidement (13) est limité d'un côté par l'ergot (14).

6. Verrouillage en cas de collision selon l'une des revendications 3 à 5, **caractérisé en ce qu'**un ressort de traction (16) est accroché au pivot (7) et au support de palier (4).

7. Verrouillage en cas de collision selon l'une des revendications 1 à 6, **caractérisé en ce qu'**une coupe de dégagement (15) est prévue à la jonction entre l'ergot (14) et le levier (7).

8. Verrouillage en cas de collision selon l'une des revendications 1 à 7, **caractérisé en ce que** la butée (11, 11') sert aussi bien de butée de retenue (11) que de butée de choc (11').

9. Verrouillage en cas de collision selon l'une des revendications 1 à 8, **caractérisé en ce qu'**une seconde butée (12) est prévue sur le support de palier (4) contre laquelle bute le listeau de maintien (3) lors d'une impulsion de choc dirigée vers l'arrière.

10. Verrouillage en cas de collision selon l'une des revendications 1 à 9, **caractérisé en ce que** le support de palier est formé de deux flasques et qu'il entoure le levier (7) et le listeau de maintien (3) des deux côtés par des flasques de palier (4a, 4b).

11. Verrouillage en cas de collision selon l'une des revendications 1 à 10, **caractérisé en ce que** le levier est formé de deux flasques et qu'il entoure le listeau de maintien (3) des deux côtés par des flasques de levier (7a, 7b).

12. Verrouillage en cas de collision selon la revendication 10, **caractérisé en ce que** la butée de retenue / de choc (11, 11') et / ou la seconde butée (12) sont des boulons ***continus*** qui relient ensemble les flasques de palier (7a, 7b) du support de palier (7).

13. Verrouillage en cas de collision selon la revendication 11, **caractérisé en ce que** le premier axe pivot (6) est un boulon continu entre les flasques de palier (7a, 7b).

14. Verrouillage en cas de collision selon la revendication 10, **caractérisé en ce que** le second axe pivot (9) est en deux pièces et relie les flasques de palier (4a, 4b) du support de palier (4) avec les flasques correspondantes (7a, 7b) du levier.

15. Verrouillage en cas de collision selon l'une des revendications 1, à 14, **caractérisé en ce que** le listeau de maintien (3) est formé de deux flasques.

16. Verrouillage en cas de collision selon la revendication 15, **caractérisé en ce qu'**une rondelle (8) est placée sur le premier axe pivot (6) entre les deux flasques (3a, 3b) du listeau de maintien (3).

17. Verrouillage en cas de collision selon l'une des revendications 1 à 16, **caractérisé en ce que** les flasques du palier (4a, 4b) du support de palier (4) sont fixées dans leur position l'une par rapport à l'autre par un boulon d'écartement 10).
